# DEMANDE DE BREVET EUROPEEN

(11) **EP 0 916 287 A2**
(43) Date de publication de la demande: **19.05.1999**
(21) Numéro de dépôt: 98402793.8
(22) Date de dépôt: 10.11.1998
(51) Int. Cl.: A47C 7/02

(54) **Siège à éléments de garnissage**

(30) Priorité: 18.11.1997 FR 1442197
(71) Demandeur: Compin, 75017 Paris (FR)
(72) Inventeur: Andreux, Yves, 27300 Courbepine (FR)
(74) Mandataire: Martinet & Lapoux

(57) **Abrégé**

L'invention concerne un siège à éléments de garnissage.

Le siège comprend un support (12) présentant une partie d'assise (14) et une partie de dossier (16), formées chacune avec une cavité centrale (22, 24), deux éléments de garnissage (26, 28) logés à l'intérieur desdites cavités et au moins un enjoliveur (38) de même forme coudée que le support, les parties d'assise et de dossier de l'enjoliveur présentant chacune une fenêtre (40, 42), de surface légèrement inférieure à celle de l'élément de garnissage correspondant, ledit enjoliveur étant articulé autour d'au moins un axe (44) de manière à pouvoir pivoter entre une position fermée où il maintient les éléments de garnissage en place dans les cavités, et une position relevée permettant d'accéder à ces derniers et de les retirer des cavités.

## Description

La présente invention concerne un siège destiné à équiper notamment des véhicules de transport en commun ou des salles de réunion, ce siège étant muni sur son assise et/ou sur son dossier d'au moins un élément de garnissage, tel que tissu, coussin, ressorts ou analogue.

Dans ces sièges de grande utilisation, les éléments de garnissage se salissent et/ou se détériorent rapidement et doivent donc être démontés de temps en temps pour être nettoyés, réparés ou remplacés.

Il existe plusieurs façons de fixer les éléments de garnissage sur la structure support d'un siège, mais elles présentent toutes des inconvénients. Par exemple, lorsqu'on les fixe au moyen de vis, leur démontage et leur remontage sont des opérations laborieuses et qui doivent être effectuées avec soin car il faut veiller à ne pas égarer les vis, ni à endommager les trous et les taraudages qui reçoivent les vis. D'autre part, les systèmes de fixation rapides, tels que clips ou "Velcro" ont l'inconvénient de rendre les éléments de garnissage vulnérables au vandalisme.

La présente invention vise à remédier à ces inconvénients en proposant un moyen de maintenir l'élément de garnissage sur le support d'un siège sans l'aide d'une fixation mécanique.

L'invention concerne à cet effet un siège, comprenant :
- un support coudé présentant une partie d'assise et une partie de dossier, formées chacune avec une cavité centrale ;
- deux éléments de garnissage logés à l'intérieur desdites cavités;
- et au moins un enjoliveur de même forme coudée que le support et dont les parties d'assise et de dossier présentent chacune une fenêtre de surface légèrement inférieure à celle de l'élément de garnissage correspondant, caractérisé en ce que les éléments de garnissage sont posés dans lesdites cavités sans y être fixés et en ce que ledit enjoliveur est articulé autour d'au moins un axe porté par le support, de manière à pouvoir pivoter entre une position fermée où il est appliqué sur les parties d'assise et de dossier du support, les bords périphériques des fenêtres débordant légèrement sur les bords des éléments de garnissage de manière à maintenir ces derniers en place dans les cavités du support, et une position relevée permettant d'accéder à ces derniers et de les retirer desdites cavités.

L'enjoliveur peut être réalisé en une seule pièce et dans ce cas, il peut être monté pivotant autour d'un axe transversal se trouvant de préférence sur la paroi supérieure de la partie de dossier du support.

L'enjoliveur peut également être réalisé en deux pièces comportant chacune une fenêtre, l'une pour l'assise et l'autre pour le dossier, ces deux pièces étant articulées autour de deux axes distincts, situés par exemple le long d'un bord transversal de l'assise et d'un bord transversal du dossier, respectivement, ou le long d'un bord latéral de l'assise et le long d'un bord latéral du dossier.

L'enjoliveur peut être maintenu dans sa position fermée par tout moyen de fixation connu, et de préférence par encliquetage sur le support, les moyens d'encliquetage étant éventuellement associés à des moyens de verrouillage à clé ou analogue.

L'invention sera mieux comprise à la lecture de la description d'un mode de réalisation qui est illustré par les dessins annexés dans lesquels:
la figure 1 est une vue en coupe longitudinale du siège montrant, en trait plein, l'enjoliveur en position fermée, et le montrant partiellement en position ouverte, en traits tiretés ;
la figure 2 est une vue en perspective du siège, l'enjoliveur étant en position légèrement relevée et les éléments de garnissage étant enlevés pour laisser voir les cavités du support ;
la figure 3 est une vue en coupe suivant la ligne III-III de la figure 1 ;
la figure 4 est une vue en coupe partielle montrant une variante de réalisation du support réalisé en deux parties ;
la figure 5 illustre le problème qui se pose lorsque le siège de la figure 1 est adossé à une cloison munie d'une barre de préhension;
la figure 6 montre une réalisation permettant de remédier à ce problème;
la figure 7 représente une autre réalisation pour résoudre ce problème ;
les figures 8 et 9 montrent deux phases successives de l'ouverture de l'enjoliveur de la figure 7.

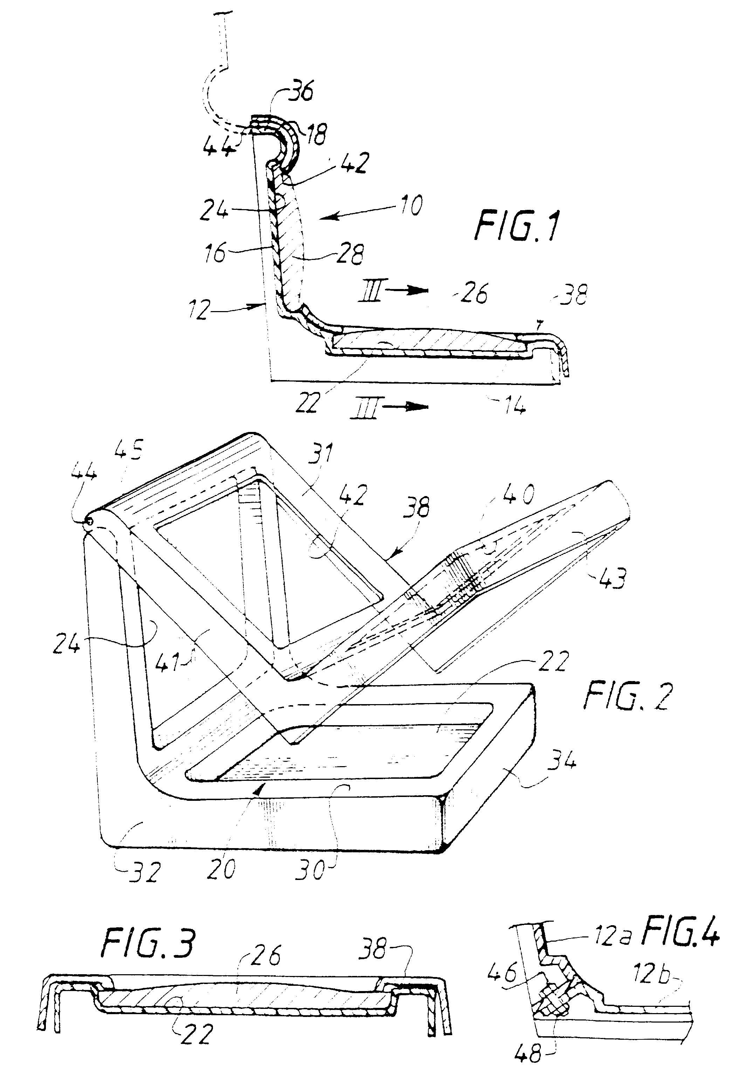

Avec référence aux figures 1 et 2, le siège 10 comprend un support monobloc 12 présentant une partie d'assise 14 et une partie de dossier 16, avec éventuellement à la partie supérieure de cette dernière, une partie appui-tête 18. Le support peut être réalisé par tout moyen connu et en n'importe quel matériau habituellement utilisé dans ce domaine. Dans le cas particulier de la figure 1, on a supposé qu'il est réalisé en une matière plastique. Le support peut être obtenu par emboutissage, par moulage par injection ou encore par mécano-soudage.

Comme le montre la figure 2, le support comprend une paroi intérieure coudée 20 représentant la surface utile du siège. Dans les parties centrales de cette paroi coudée situées dans la partie d'assise 14 et dans la partie de dossier 16 sont formées respectivement deux cavités 22, 24 dans lesquelles peuvent être insérés deux éléments de garnissage 26, 28, représent4s sur la figure 1 sous forme de coussins, mais qui peuvent également être constitués de tissu ou de ressorts. Les éléments de garnissage emplissent exactement les cavités et leur surface extérieure vient à l'affleurement des rebords périphériques 30 des cavités ou fait légèrement saillie par rapport auxdits rebords.

Le support comporte également des parois latérales 32, frontale 34 (situées à l'avant de la partie d'assise) et supérieure 36 (située au-dessus de l'appui- tête).

Afin de maintenir en place les éléments de garnissage dans ces cavités, il est prévu un enjoliveur 38 ayant la même forme coudée que le support. L'enjoliveur comporte une face interne 31 qui recouvre les faces internes 30 des parties d'assise et de dossier du support, et des parois latérales, frontale et supérieure 41, 43, 45 gui recouvrent respectivement les parois 32, 34 et 36 du support. Les parties d'assise et de dossier de l'enjoliveur présentent dans leur partie centrale deux fenêtres 40, 42 de même forme que les éléments de garnissage 26, 28 mais de dimensions légèrement inférieures.

L'enjoliveur est articulé autour d'un axe transversal 44 situé à la partie supérieure de la partie de dossier. Il peut donc être amené par pivotement autour de cet axe, soit dans la position fermée montrée en trait plein à la figure 1, où il retient les éléments de garnissage 26, 28 par leurs bords, ces derniers étant apparents à travers les fenêtres, soit dans une position relevée d'environ 180° vers le haut, partiellement représentée en traits tiretés sur la figure 1. Dans cette position, les éléments de garnissage sont complètement dégagés et peuvent être retirés des cavités 22, 24. Une butée, non représentée, peut être prévue pour définir la position relevée de l'enjoliveur, qui peut alors garder cette position sans qu'on ait à l'y maintenir, ce qui permet à un opérateur d'avoir les mains libres pour retirer les éléments de garnissage.

Dans sa position fermée, l'enjoliveur peut être verrouillé par tout moyen connu, et de préférence par encliquetage, avec éventuellement un verrouillage ou un blocage de l'encliquetage par un système à clé ou analogue.

Dans ce qui précède, on a supposé que l'espace situé au-dessus et à l'arrière du dossier est complètement dégagé, ce qui a permis d'amener l'enjoliveur en position relevée sans qu'aucun obstacle ne limite son mouvement.

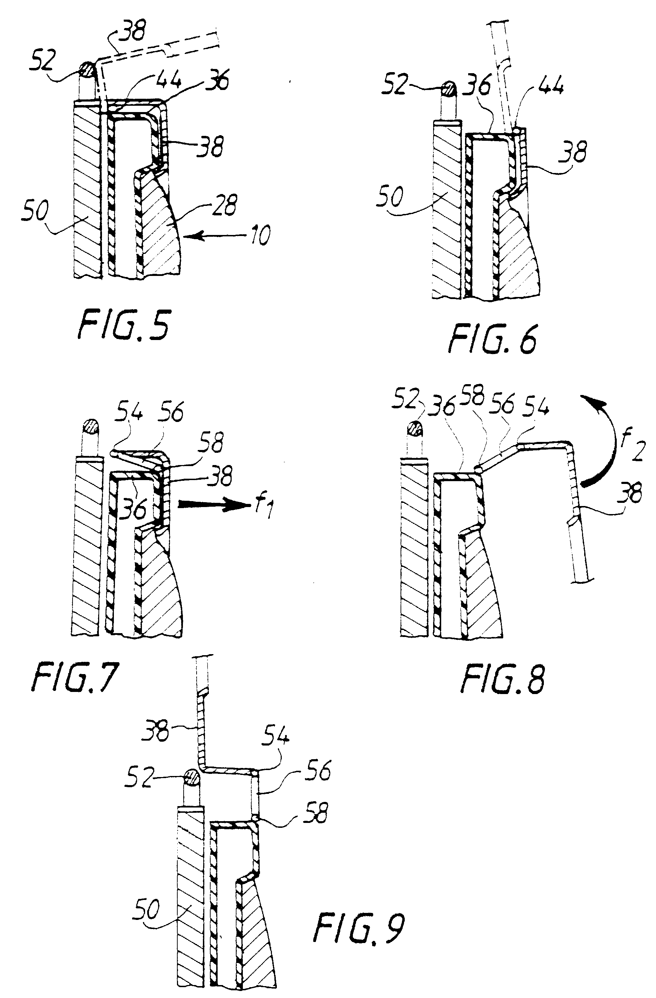

Toutefois, certains sièges sont munis d'un élément saillant au-dessus et/ou à l'arrière du dossier. La figure 5 montre un exemple d'un tel siège que l'on trouve dans certains véhicules de transport en commun, tel que le métro. Le siège 10 est adossé à une cloison verticale 50 de hauteur légèrement supérieure à celle du siège et qui porte à sa partie supérieure une barre horizontale de préhension 52 à laquelle les voyageurs debout peuvent se tenir.

Dans un tel siège, si l'axe d'articulation 44 est placé, comme précédemment, le long du bord arrière de la paroi supérieure 36 du dossier, l'enjoliveur 38 ne pourra être relevé que d'un angle à peine supérieur à 90° (position en traits tiretés), car il vient en butée contre la barre 52.

Selon l'invention, pour pouvoir obtenir un angle de pivotement aussi important que dans le mode de réalisation de la figure 1, on déporte l'axe de pivotement 44 sur le bord avant de la paroi supérieure 36 du dossier et on supprime la partie de l'enjoliveur qui recouvre la paroi 36, comme représenté à la figure 6.

On constate toutefois que dans cette dernière réalisation, la paroi supérieure 36 de la partie de dossier n'est pas recouverte par l'enjoliveur lorsque que celui-ci est en position fermée, ce qui n'est pas très esthétique.

La variante de réalisation montrée à la figure 7 ne présente par cet inconvénient. L'enjoliveur 38 est articulé par son bord supérieur arrière à une extrémité 54 d'une bielle 56 dont l'autre extrémité est articulée sur un axe 58 porté par le bord avant de la paroi supérieure 36 du dossier du support.

Pour accéder aux éléments de garnissage, on commence par exercer une traction sur l'enjoliveur dans le sens de la flèche f1, ce qui déploie la bielle 56 et amène l'enjoliveur dans la position représentée à la figure 8. On peut alors faire pivoter l'ensemble de l'enjoliveur et de la bielle d'environ 180° dans le sens de la flèche f2 jusqu'à l'amener dans la position représentée à la figure 9.

On constate bien qu'en position fermée (figure 7), l'enjoliveur recouvre la paroi 36 et qu'en position ouverte (figure 9), il est amené à la verticale sans que la barre 52 constitue un obstacle.

Plusieurs modifications peuvent être apportées aux modes de réalisation qui viennent d'être décrits sans sortir du cadre de l'invention. Par exemple, l'enjoliveur peut également être articulé autour d'un axe se trouvant du côté de la paroi frontale 34 de la partie d'assise. D'autre part, comme représenté sur la figure 4, le support peut être réalisé en deux pièces distinctes formant respectivement l'assise 12a et le dossier 12b, ces deux pièces étant assemblées entre elles par tout moyen connu, par exemple au moyen de boulons 46 et d'écrous 48.

De la même façon, l'enjoliveur peut être réalisé en deux parties, l'une pour recouvrir l'assise et l'autre pour recouvrir le dossier. Ces parties seront, bien entendu, articulées autour d'axes distincts, situés le long d'un des bords de l'assise et d'un des bords du dossier.

L'invention s'applique également au cas où seule la partie d'assise est munie d'un élément de garnissage, ou bien au cas où le support de siège comporte une unique cavité qui s'étend sans discontinuer sur la partie d'assise et sur la partie de dossier.

## Revendications

1. Siège (10) à éléments de garnissage comprenant un support (12) présentant une partie d'assise (14) et une partie de dossier (16), formées chacune avec une cavité centrale (22, 24);
- deux éléments de garnissage (26, 28) posés dans ces cavités;
- et au moins un enjoliveur (38) de même forme coudée que le support et dont les parties d'assise et de dossier présentent chacune une fenêtre (40, 42), de surface légèrement inférieure à celle de l'élément de garnissage correspondant, caractérisé en ce que les éléments de garnissage (26, 28) sont posés dans lesdites cavités sans y être fixés et en ce que ledit enjoliveur est articulé autour d'au moins un axe (44 ; 54, 58) porté par le support, de manière à pouvoir pivoter entre une position fermée où il est appliqué sur les parties d'assise et de dossier du support, les bords périphériques des fenêtres débordant légèrement sur les bords des éléments de garnissage de manière à les maintenir en place dans les cavités, et une position relevée permettant d'accéder à ces éléments de garnissage et de les retirer desdites cavités.

2. Siège selon la revendication 1, caractérisé en ce que l'enjoliveur (38) est réalisé en une seule pièce qui recouvre à la fois la partie d'assise (14) et la partie de dossier (16) du support.

3. Siège selon la revendication 1, caractérisé en ce que l'axe de pivotement (44) est situé le long du bord arrière de la paroi supérieure (36) de la partie de dossier.

4. Siège selon la revendication 1, caractérisé en ce que l'axe de pivotement est situé le long de la face frontale (34) de la partie d'assise.

5. Siège selon la revendication 1, caractérisé en ce que l'axe de pivotement (44) est situé sur le bord avant de la paroi supérieure (36) de la partie du dossier et en ce que la partie de l'enjoliveur qui recouvre cette paroi est supprimée.

6. Siège selon la revendication 1, caractérisé en ce que l'enjoliveur 38 est articulé par son bord supérieur à une extrémité d'une bielle (56) dont l'autre extrémité est articulée sur un axe (58) porté par le bord avant de la paroi supérieure (36) du dossier, ce qui permet d'écarter l'enjoliveur (38) du dossier, avant de le relever à sa position ouverte.

7. Siège selon la revendication 1, caractérisé en ce que l'enjoliveur est retenu dans sa position fermée par tout moyen de fixation, et de préférence par encliquetage.

8. Siège selon la revendication 1, caractérisé en ce que l'enjoliveur est réalisé en deux pièces distinctes, qui recouvrent respectivement la partie d'assise et la partie de dossier du support.

9. Siège selon la revendication 8, caractérisé en ce que les deux pièces formant l'enjoliveur sont articulées respectivement le long d'un des bords de la partie d'assise et d'un des bords de la partie de dossier du support.

10. Siège selon l'une des revendications 1 à 9, caractérisé en ce que le support est réalisé en une seule pièce par moulage par injection, par emboutissage ou par mécano-soudage.

11. Siège selon l'une des revendications 1 à 9, caractérisé en ce que le support est réalisé en deux pièces (12a, 12b), l'une formant l'assise et l'autre formant le dossier, ces deux pièces étant assemblées entre elles.

12. Siège selon la revendication 1, caractérisé en ce que le support comporte une unique cavité qui s'étend sans discontinuer sur la partie d'assise et sur la partie de dossier.
